Europäisches Patentamt

European Patent Office

Office européen des brevets

(11) Veröffentlichungsnummer: **0 394 536**
**A1**

(12) **EUROPÄISCHE PATENTANMELDUNG**

(21) Anmeldenummer: **89107739.8**

(22) Anmeldetag: **28.04.89**

(51) Int. Cl.⁵: **B60C 9/18**

(43) Veröffentlichungstag der Anmeldung:
**31.10.90 Patentblatt 90/44**

(84) Benannte Vertragsstaaten:
**AT BE CH DE ES FR GB GR IT LI LU NL SE**

(71) Anmelder: **HILLE + MÜLLER KG**
**Am Trippelsberg 48**
**D-4000 Düsseldorf 13(DE)**

Anmelder: **Janus, Jonny**

**Kreuzstrasse 53**
**D-4000 Düsseldorf 1(DE)**

(72) Erfinder: **Janus, Jonny**
**Kreuzstrasse 53**
**D-4000 Düsseldorf 1(DE)**

(74) Vertreter: **Türk, Gille, Hrabal**
**Brucknerstrasse 20**
**D-4000 Düsseldorf 13(DE)**

(54) **Gürtel-Luftreifen für Fahrzeugräder.**

(57) Es ist ein Gürtel-Luftreifen (1) für Fahrzeugräder offenbart, der einen torusförmig gewölbten Körper (2) aus elastischem Material aufweist, an dessen Außenumfang sich eine Lauffläche (3) und an dessen Innenumfang sich zwei parallel zueinander verlaufende Wulstringe (6, 7) befinden. In den gewölbten Körper (2) ist eine von Wulstring zu Wulstring verlaufende Karkasse (10) und im Bereich der Lauffläche eine Gürtelkonstruktion, die für die Seitensteifigkeit des Reifens einen Seitenkräfte aufnehmenden Quergürtel (15; 16; 20) und für die Umfangssteifigkeit des Reifens einen aus wenigstens einem ringförmigen Festigkeitsträger (13) bestehenden Umfangsgürtel aufweist, eingebettet. Der Quergürtel (15; 16; 20) hat eine radial äußere drucksteife Lage (11) und im Abstand (17) davon eine radial innere zugfeste zweite Lage (10; 19), zwischen denen sich eine sie verbindende Matrix (18) befindet. Beide Lagen und die dazwischen befindliche Matrix bilden ein beulfestes Tragwerk.

FIG.1

EP 0 394 536 A1

## Gürtel-Luftreifen für Fahrzeugräder

Die Erfindung betrifft einen Gürtel-Luftreifen, der einen torusförmig gewölbten Körper aus elastischem Material wie vulkanisiertem kautschukartigen Material oder Kautschuk aufweist und am Außenumfang mit einer Lauffläche und am Innenumfang mit zwei parallel zueinander verlaufenden Wulstringen versehen ist. In dem torusförmig gewölbten Körper ist eine von Wulstring zu Wulstring verlaufende Karkasse eingebettet und ferner im Bereich der Lauffläche eine Gürtelkonstruktion, die für die Seitensteifigkeit des Reifens einen Seitenkräfte übertragenden Quergürtel und für die Umfangssteifigkeit des Reifens einen aus wenigstens einem ringförmigen Festigkeitsträger bestehenden Umfangsgürtel aufweist.

Bekannte Gürtel-Luftreifen dieser Gattung (EP-A-0 264 539) mit mehrlagigen Quergürteln bieten vorteilhafte Verbesserungen im Handling, Komfort und der Geräuschentwicklung, ohne daß die Vorteile dehnbarer Gürtelreifen anderer Art, nämlich der geringe Rollwiderstand und die hohe Schnell-Lauffähigkeit, verloren gingen. Als eine Erklärung für die überraschend hohe Schräglaufsteifigkeit dieser bekannten Gürtel-Luftreifen und das um etwa 3 Dezibel niedrigere Geräuschniveau kann die Ausbildung des Quergürtels in mehrlagiger Sandwichbauweise angenommen werden, bei der zwei durch eine Gummischicht verbundene, in Umfangsrichtung des Reifens verlaufende Festigkeitsträger als Quergürtelelemente vorgesehen sind (Fig. 7 der EP-A-0 264 539).

Bei derartigen Quergürteln ist von besonderem Interesse, daß der Steifigkeitszuwachs bei entsprechenden äußeren Krafteinwirkungen in tangentialer und radialer Richtung relativ gering, aber in Seitenrichtung bedeutend ist. Neben der Konstruktionshöhe des sandwichartig ausgebildeten Quergürtels bestimmen seine Breite, aber auch der Modul der die beiden die äußeren Flächen des Quergürtels bildenden Stahlfolien verbindenden Gummischicht - auch Matrix genannt - dessen Eigenschaften.

Besonders vorteilhafte Eigenschaften wurden mit sandwichartig ausgebildeten Quergürteln erreicht, deren statisch wirksame Bauhöhe bis etwa 3 mm beträgt. Dabei wird von einer Stahlfolie mit einer Dicke von 0,1 mm ausgegangen, während die zwischen den beiden Stahlfolien befindliche Gummischicht eine Dicke von etwa 3 mm aufweist.

Ein derartiger sandwichartiger Quergürtel entwickelt in Querrichtung der belasteten Gürtelplatte des Reifens eine außerordentlich hohe Beulsteifigkeit, so daß die von den Reifenschultern aufgrund des Momenten-Angriffes ausgehende Gefahr einer Einbeulung im mittleren Bereich des Luftreifens praktisch ausgeschaltet ist. Zugleich dämpft der sandwichartige Charakter des Gürtels die durch die Rauhigkeit und die Aufschlagenergie in der Gürtelplatte erzeugten Schwingungen bzw. deren Resonanzen auch im unbelasteten Teil des Umfanges des Reifens sehr wirksam.

Die vorteilhaften Eigenschaften der Gürtelkonstruktion vorbekannter Gürtel-Luftreifen sind also auf die sandwichartige Konstruktion des Gürtels zurückzuführen, welche zwei Lagen aus Stahlfolie aufweisen.

Es wurde nun gefunden, daß die vorteilhaften Eigenschaften der Gürtelkonstruktion auch mit nur einer Lage einer einstückigen Stahlfolie erzielt werden können, wenn diese bei einer bestimmten Anordnung in seitlicher Belastungsrichtung zusammen mit den zahlreichen in 90 Grad verlaufenden Cord-Festigkeitsträgern der Karkasse oder vergleichbaren Festigkeitsträgern ein beulsteifes Tragwerk bildet. In allen anderen Belastungsrichtungen verhalten sich diese Bauteile des Quergürtels jedoch weitgehend neutral, d.h. also sowohl in tangentialer als auch in radialer Belastungsrichtung. Inzwischen durchgeführte Versuche haben dies bestätigt.

Der Erfindung liegt die Aufgabe zugrunde, die durch die sandwichartige Struktur der Gürtelkonstruktion eines Gürtel-Luftreifens erzielbaren Vorteile ebenfalls mit einer einfacheren und damit leichteren Gürtelkonstruktion zu erreichen.

Diese Aufgabe wird erfindungsgemäß mit einem Gürtel-Luftreifen der eingangs genannten Gattung gelöst, welcher die Merkmale des kennzeichnenden Teiles des Patentanspruches 1 aufweist.

Vorteilhafte Ausgestaltungen der Erfindung sind Gegenstand der Unteransprüche.

Die erfindungsgemäße Gürtelkonstruktion weist - ähnlich wie ein Bauwerksträger - zwei in einem vorgegebenen Abstand voneinander in 90°-Richtung angeordnete Gurte auf, von denen der äußere druckstabil und der andere zugstabil ist. Diese beiden Komponenten der Gürtelkonstruktion sind von einer dazwischen befindlichen, aus dem elastischen Material des Luftreifens bestehenden Matrix miteinander verbunden. Der gegenseitige Abstand der beiden äußeren Komponenten der Gürtelkonstruktion ist durch die Dicke der Matrix bestimmt, was wiederum die Stabilität bzw. Beulsteifigkeit der Gürtelkonstruktion radial nach innen bestimmt.

Die zugfeste Komponente der Gürtelkonstruktion besteht vorzugsweise aus dehnungsstabilen Corden, Fäden, Drähten oder Garnen, wobei diese Corde, Fäden, Drähte oder Garne auch Teile der Karkasse sein können.

Die Wirkung des nur in 90 Grad-Richtung bzw. Querrichtung funktionierenden Tragwerkes, in welchem die radial außen liegende Stahlfolie die drucksteife Funktion und die radial innen liegenden Festigkeitsträger die zugsteife Funktion eines Sandwich übernehmen, kann nicht nur über den größtmöglichen Abstand seiner Komponenten gesteigert werden, sondern auch durch deren geometrischen Verlauf zueinander. Dies gilt insbesondere für konvex bombierte Reifen mit entsprechendem Gürtelquerschnitt, deren Karkasse aus textilen Festigkeitsträgern mit bedingter Zugsteifigkeit besteht, z.B. aus Rayon, Nylon, Polyester od. dgl.

Dabei kommt es darauf an, daß der konvexe Verlauf der drucksteifen Stahlfolie stärker ausgeprägt ist als der der zugsteifen Karkasse oder der entsprechenden zugfesten Elemente. Somit kommt es in der Aufstandsfläche des Luftreifens in Querrichtung zu einer Begradigung der Krümmung des konvex bombierten Reifens, wobei durch die Begradigung der drucksteifen Stahlfolie diese lateral breiter wird als die zugsteifen Komponenten. Dies hat die Folge, daß die zugsteifen Festigkeitsträger - beispielsweise die Corde der Karkasse - noch etwas stärker vorgespannt gedehnt werden und einer Ausbeulung radial nach innen verstärkten Widerstand entgegensetzen.

Den ausgeprägteren bzw. stärkeren konvexen Verlauf der drucksteifen Stahlfolie erreicht man durch entsprechenden Aufbau bzw. entsprechende Ausbildung der Matrix, beispielsweise mittels eingelegter Gummiplatten oder auch mit in Umfangsrichtung verlaufenden Teilen des Umfangsgürtels. Im letztgenannten Fall könnte das für die Gürtelkonstruktion zur Verfügung stehende Querschnittsvolumen konstruktiv ökonomisch genutzt werden, was sich vorteilhaft auf Kosten und Gewicht des entsprechend ausgerüsteten Luftreifens auswirkt.

Bestehen dagegen die zugsteifen Festigkeitsträger, beispielsweise der Karkasse, aus praktisch undehnbarem Material wie Stahl- oder Aramidcord oder ist die Karkasse mit bedingt dehnbaren Festigkeitsträgern überdimensioniert oder verstärkt, so ist eine relativ starke konvexe Bombierung des Gürtelquerschnittes nicht erforderlich. Vielmehr kann in diesem Falle eine extrem flache bis zylindrische Querschnittskontur der Gürtelkonstruktion bzw. des Laufstreifens des Reifens gewählt werden.

Es ist einleuchtend, daß der aus in 90 Grad-Richtung bzw. Querrichtung verlaufenden Stahlcorden, beispielsweise einer LKW-Karkasse, bestehende Zuggurt des Trägerwerkes der erfindungsgemäßen Quergürtelkonstruktion infolge seiner Dehnsteife sehr effektiv mit der in Querrichtung drucksteifen Stahlfolie des Quergürtels zusammenwirkt.

Hat hingegen die Karkasse selbst nicht ausreichend dehnsteife Festigkeitsträger, so kann das Tragwerk der erfindungsgemäßen Quergürtelkonstruktion auch eine die Karkasse im Bereich des Laufstreifens des Luftreifens verstärkende 90 Grad-Lage aus dehnsteifen Festigkeitsträgern, beispielsweise aus Aramid- oder Stahlcord, aufweisen. Diese aus in 90 Grad-Richtung verlaufenden Festigkeitsträgern bestehende Lage kann sowohl über als auch unter der Karkasse angeordnet sein, was von der jeweils gewünschten Charakteristik der Quergürtelkonstruktion abhängt.

Durch Anordnung der dehnsteifen 90 Grad-Lage unter der Karkasse, beispielsweise in der Inlinerschicht des Reifens, wird die Karkasse praktisch Teil der Matrix der erfindungsgemäßen Quergürtelkonstruktion. So kann die statisch wirksame Bauhöhe des Tragwerkes der Quergürtelkonstruktion wirksam erhöht werden, um ein Ausbeulen der Gürtelplatte radial nach innen und damit die Bildung von Drucktälern unterdrückt werden. Die Stahlfolie der Quergürtelkonstruktion steht mit ihrem Widerstandsmoment voll zum Übertragen von Seitenkräften zur Verfügung.

Die erfindungsgemäße Gürtelkonstruktion weist ein konstruktives Tragwerk auf, in welchem ansonsten unabhängig voneinander arbeitende Festigkeitskomponenten als Bestandteil des Gesamtgürtels allein im Aufstandsbereich des Luftreifens quer zu seiner Laufrichtung so zusammen arbeiten, daß sich bei auf die Gürtelplatte einwirkenden Kräften, die eine Verformung radial nach innen bewirken können, das Tragwerk wie ein Sandwich verhält. In diesem statisch nur in Querrichtung wirksamen Tragwerk übernimmt im Aufstandsbereich des Luftreifens die vorzugsweise einstückige Stahlfolie die Funktion eines Druckgurtes und die Karkasse oder eine entsprechende 90 Grad-Verstärkungslage die Funktion eines Zuggurtes.

Durch den Aufbau der Gürtelkonstruktion, die Dicke der Matrix derselben, deren Modul bzw. Schubfestigkeit und durch Abstimmung der spezifischen Materialeigenschaften der Zug- und der Druckkomponente des Quergürtels läßt sich bei einer ausgeprägten Flexibilität des Gürtels radial nach außen und bei kleinsten Ein- und Auslaufradien an der Aufstandssehne ein hoher Widerstand gegen Ausbeulen radial nach innen zur Unterdrükkung von Drucktälern quer zur Laufrichtung des Luftreifens erzielen. Hierdurch wird eine wesentliche Verbesserung im Handling des Luftreifens, d.h. also eine präzise Übertragung von hohen Seitenkräften unter Schräglauf erreicht.

Die mit dem erfindungsgemäßen Luftreifen erzielten Verbesserungen beruhen auf der neuartigen Kombination der zahlreichen Festigkeitsträger der Radialkarkasse oder einer dehnsteifen Verstärkung derselben als Zuggurt mit der in 90 Grad drucksteifen vorzugsweise einstückigen Stahlfolie als Druckgurt zu einem gezielt nur in Querrichtung zusammenarbeitenden System.

Je größter der Abstand der den Druckgurt des Tragwerkes bildenden Stahlfolie von der den Zuggurt bildenden Karkasse bzw. 90 Grad-Verstärkung und somit die Dicke der Matrix ist, desto beulsteifer ist das gesamte System gegen Verformungen radial nach innen. Zweckmäßig werden Teile des Umfangsgürtels zwischen Druck- und Zuggurt angeordnet und bilden somit Teile der Matrix, so daß der Gesamtgürtel ein optimal geringes Volumen erhalten kann.

Im Stand der Technik ist kein vergleichbares Tragwerk einer Gürtelkonstruktion bekannt. Weder die zahlreichen bekannten Varianten mit mehrlagigen Cordgewebeeinlagen noch mit Gummi- bzw. auch Kunststoff- und Metalleinlagen sind konstruktiv vergleichbar. Die Ziele dieser bekannten Gürtelkonstruktionen sind durchweg anders als die der erfindungsgemäßen Gürtelkonstruktion, die ein neuartiges, nur in Querrichtung des Luftreifens wirksames kombiniertes Tragwerk aufweist.

So sind auch weder die bekannten, im Kreuzverband liegenden Stahlcordlagen noch sonstige bekannte Einlagen in der Lage, die bei der erfindungsgemäßen Gürtelkonstruktion entscheidende Rolle eines breitenkonstanten Druckgurtes bzw. einer drucksteifen Komponente zu erfüllen, denn schon geringste Veränderungen der 90 Grad-Anordnung der Baubreite dieser Einlagen, beispielsweise durch Verformen, Scheren, Winkeländerung, Stauchen usw., heben das Zusammenwirken mit der zugstabilen Festigkeitsstruktur der in 90 Grad-Richtung verlaufenden Karkasse sofort auf. Sogar die aus Festigkeitsträgern in Form von Stahlfolien aufgebauten mehrlagigen sandwichartigen Quergürtel (DE-A-3 635 491 und EP-A-0 264 539) entsprechen nicht dem Grundgedanken der vorliegenden Erfindung, da von den beiden Stahlfolien des bekannten sandwichartigen Quergürtels sowohl die lateralen Zugkräfte als auch die lateralen Druckkräfte aufgenommen werden müssen, ohne daß die Festigkeitsstruktur der in gleicher Richtung verlaufenden Karkasse mit einbezogen würde.

Die betriebsbedingte Beanspruchung des Tragwerkes eines leicht konvex bombierten Gürtel-Luftreifens läßt sich wie folgt beschreiben:

a.) Durch den Luftdruck und die Zentrifugalkraft gerät die Karkasse des Reifens voll unter Zugspannung, während die Stahlfolie durch die Abpufferung der Matrix nur geringe laterale Zugspannung erhält, sich aber radial nach außen dehnen kann.

b.) Im Abplattungsbereich des Luftreifens gerät die Stahlfolie aber unter laterale Druckspannung und bewirkt dabei eine zusätzliche Zugspannung in den lateralen Festigkeitsträgern der Karkasse oder der Verstärkung derselben, so daß deren Neigung, sich infolge einer durch Seitenkraft oder Querkraft ausbildenden Ausbeulung radial nach innen noch weiter zu dehnen, entgegengewirkt wird.

Neben der verbesserten Stabilisierung der Gürtelplatte des belasteten Luftreifens gegen Drucktäler ist das Tragwerk der Gürtelkonstruktion in der Lage, die durch Fahrbahnrauhigkeiten entstehenden Schwingungen zu dämpfen, so daß hierdurch auch der Komfort und die Geräuschentwicklung positiv beeinflußt werden.

In der Zeichnung sind drei Ausführungsbeispiele der Gürtelkonstruktion eines erfindungsgemäßen Gürtel- Luftreifens schematisch dargestellt, und zwar zeigt

Fig. 1 einen Querschnitt durch einen Gürtel-Luftreifen gemäß einer ersten Ausführungsform der Erfindung,

Fig. 2 einen Querschnitt durch die Gürtelkonstruktion eines Gürtel-Luftreifens gemäß einer zweiten Ausführungsform der Erfindung,

Fig. 3 einen Querschnitt durch die Gürtelkonstruktion eines Gürtel-Luftreifes gemäß einer dritten Ausführungsform der Erfindung,

Fig. 4 einen Querschnitt durch die Gürtelkonstruktion eines konvex gewölbt vorbombierten Gürtel-Luftreifens im unbelasteten Zustand,

Fig. 5 einen Querschnitt ähnlich wie in Fig. 4, jedoch im belasteten Zustand des Gürtel-Luftreifens,

Fig. 6 einen schematischen Längsschnitt durch die Gürtelkonstruktion eines Gürtel-Luftreifens der Ausführungsform gemäß Fig. 2.

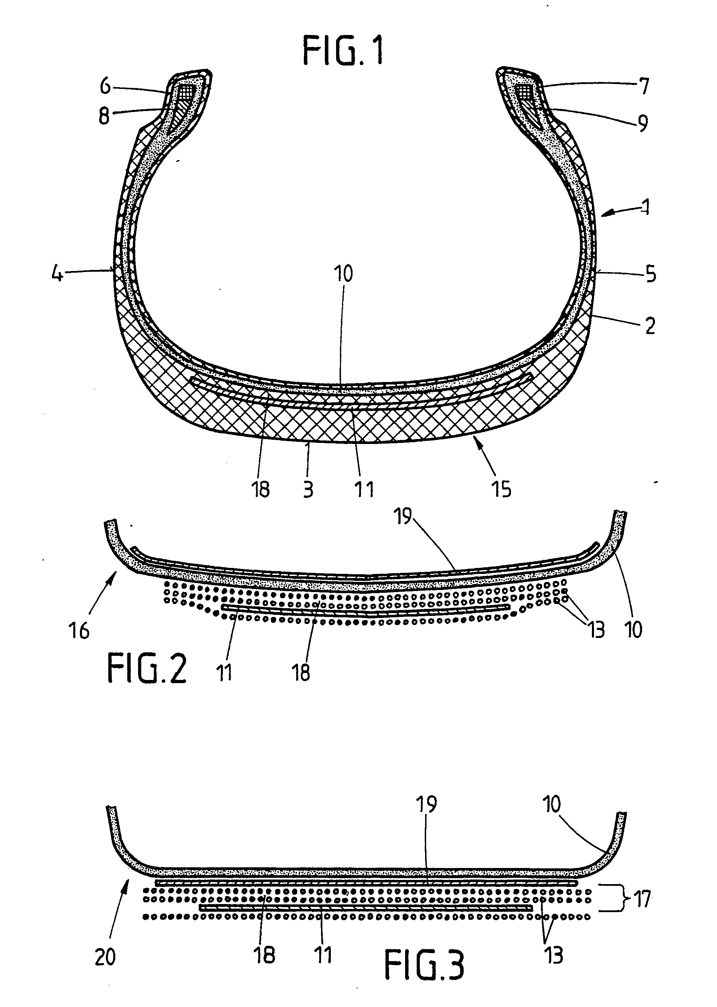

Der in Figur 1 gezeigte Gürtel-Luftreifen (1) hat einen torusförmig gewölbten Körper (2), der im wesentlichen aus elastischem Material wie Kautschuk oder vulkanisiertem kautschukartigen Material besteht. Am Außenumfang des Körpers (2) ist eine Lauffläche (3) angeordnet, von der seitliche Flanken (4 und 5) ausgehen, die jeweils in einem Wulstring (6 bzw. 7) auslaufen. In jedem Wulstring ist ein Kernring (8 bzw. 9) eingebettet. Die Wulstringe (6 und 7) sind dazu bestimmt, auf der nicht dargestellten Felge eines Fahrzeugrades aufzuliegen, während die Lauffläche für den Kontakt mit der Fahrbahn bzw. dem Boden, auf dem das Fahrzeug steht oder fährt, bestimmt ist.

Im elastischen Körper (2) ist eine Karkasse (10) eingebettet, die radial von Wulstring zu Wulstring verläuft und mit ihren Enden um die in den Wulstringen (6 und 7) eingebetteten Kernringe (8 und 9) umgeschlagen ist. Diese Karkasse besteht aus Cordfäden, die parallel zueinander angeordnet sind.

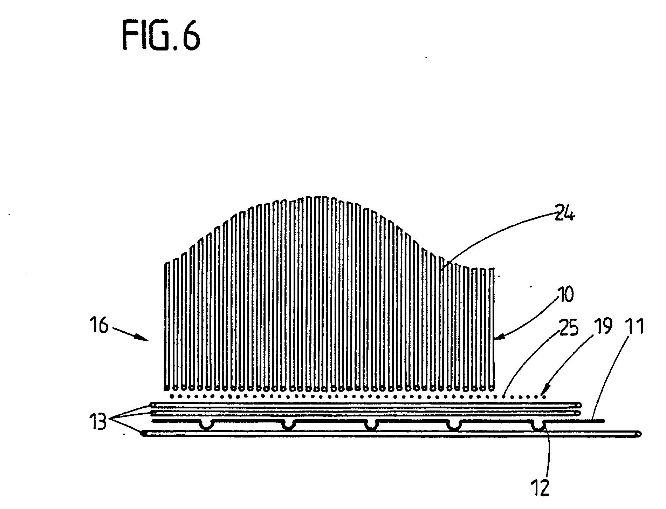

Im mittleren Bereich des Körpers (2) und damit unter der Lauffläche (3) desselben ist auf der Außenseite der Karkasse eine sich etwa über die Breite der Lauffläche erstreckende und in Umfangsrichtung des Gürtel-Luftreifens (1) ringförmige einstückige Stahlfolie (11) eingebettet, die, wie Fig. 6 zeigt, in Querrichtung verlaufende Ausbuchtungen (12) aufweist, welche sie in Umfangsrichtung des Gürtel-Luftreifens (1) dehnbar machen. In Querrichtung oder lateraler Richtung, d.h. in der Schnittebene der Fig. 1, ist die Stahlfolie (11) jedoch drucksteif.

Zwischen der Stahlfolie (11) und der Karkasse (10) sind in Umfangsrichtung des Gürtel-Luftreifens Corde (13) als Festigkeitsträger eingebettet.

Bei der Ausführungsform gemäß Figur 1 bilden die Karkasse (10), die Stahlfolie (11) und das zwischen diesen befindliche elastische Material des Körpers (2), das als Matrix (14) bezeichnet werden kann, eine Gürtelkonstruktion (15), bei der die Stahlfolie eine Art Druckgurt und die dehnungssteife Corde aufweisende Karkasse (10) den Zuggurt eines Tragwerkes bilden, das dem Gürtel-Luftreifen eine hohe Seitensteifigkeit vermittelt, so daß dieser beim Angriff seitlicher oder lateraler Kräfte nicht nach innen ausbeult und sich im Bereich der Lauffläche bei seitlicher Belastung des Reifens keine Drucktäler bilden können. In Umfangsrichtung und radial nach außen ist diese Gürtelkonstruktion (15) jedoch elastisch dehnbar.

Bei der Ausführungsform gemäß Figur 2 weist die Gürtelkonstruktion (16) des Gürtel-Luftreifens wiederum eine außen liegende Stahlfolie (11) auf, die sich zwischen den Schultern des Luftreifens im Bereich seiner Lauffläche erstreckt und zusammen mit den anderen Teilen der Gürtelkonstruktion in das Gummimaterial des Luftreifens eingebettet ist.

Die Stahlfolie (11) ist in einem möglichst großen Abstand von der im Luftreifen eingebetteten Karkasse (10) angeordnet, so daß sich eine optimale Bauhöhe (17) ergibt.

Zwischen Stahlfolie (11) und Karkasse (10) sind in Umfangsrichtung des Luftreifens und somit in der Null-Grad-Lage befindliche Corde (13) als Umfangsfestigkeitsträger in zwei Lagen angeordnet. Eine dritte Lage von Corden (13) befindet sich auf der Außenseite der Stahlfolie (11). Die zwischen der Stahlfolie (11) und der Karkasse (10) befindlichen Corde (13) bilden zusammen mit dem Gummimaterial des Luftreifens und der Karkasse (10) eine Matrix (18), welche die lateral drucksteife Stahlfolie (11) mit der lateral dehnsteifen Komponente der Gürtelkonstruktion verbindet.

Auf der Innenseite der Karkasse (10) ist bei dieser Ausführungsform eine einen Zuggurt bildende dehnsteife 90 Grad-Lage (19) angeordnet, die aus hochgradig zugfesten Fäden oder Corden gebildet ist. Die 90 Grad-Lage (19) verstärkt hierbei im Bereich der Lauffläche des Gürtel-Luftreifens (1) die Karkasse (10) und ist die zugsteife Komponente des Tragwerkes der Gürtelkonstruktion (16), welches die Querkräfte aufnimmt und Ausbeulen radial nach innen verbindet.

Die Gürtelkonstruktion (20) gemäß Fig. 3 unterscheidet sich von den Gürtelkonstruktionen (15 und 16) gemäß Fig. 1 und 2 dadurch, daß eine dehnsteife 90 Grad-Lage (19) auf der Außenseite der Karkasse (10) angeordnet ist, so daß die Karkasse (10) nicht Teil des Tragwerkes bzw. der Matrix (18) der Gürtelkonstruktion (20) ist. Die Bauhöhe (17) des Tragwerkes ist dementsprechend durch den Abstand zwischen Stahlfolie (11) und 90 Grad-Lage (19) bestimmt.

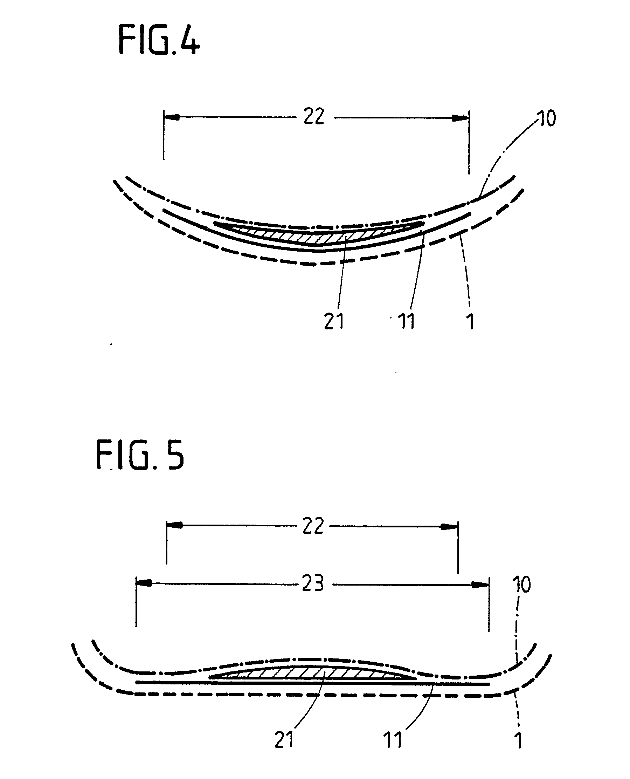

In Fig. 4 und 5 ist gezeigt, daß die Wirkung des nur in 90 Grad-Richtung bzw. lateraler Richtung funktionierenden sandwichartigen Tragwerkes, bei dem die außen liegende Stahlfolie (11) die drucksteife Funktion und die Festigkeitsträger der Karkasse (10) oder der 90 Grad-Lage (19) die zugsteife Funktion des Sandwich übernehmen, nicht nur über den größtmöglichen Abstand dieser beiden Komponenten gesteigert werden kann, sondern auch durch den geometrischen Verlauf dieser Komponenten zueinander. Fig. 4 zeigt einen konvex bombierten Gürtel-Luftreifen (1), dessen Karkasse (10) aus textilen Festigkeitsträgern mit besonderer Dehnsteifigkeit besteht, z.B. aus Aramid, Rayon, Nylon oder Polyester. Durch eine in den Körper des Gürtel-Luftreifens (1) im mittleren Bereich desselben zwischen Karkasse (10) und Stahlfolie (11) eingebettete gewölbte Einlage (21) ist die drucksteife Stahlfolie (11) im unbelasteten Bereich des Gürtel-Luftreifens (1) stärker konvex gewölbt als die zugsteife Karkasse (10). Im Aufstandsbereich des Gürtel-Luftreifens (1) kommt es daher in Querrichtung zu einer Begradigung der Wölbung der beiden Komponenten der Gürtelkonstruktion, die bei der drucksteifen Stahlfolie (11) ausgeprägter als bei der zugsteifen Karkasse (10) ist, wie Fig. 5 zeigt. Daher werden die Festigkeitsträger der Karkasse (10) noch etwas stärker vorgespannt gedehnt als die Stahlfolie (11) und setzen deshalb einem Ausbeulen des Gürtel-Luftreifens radial nach innen verstärkten Widerstand entgegen.

Die Einlage (21) kann aus Gummiplatten oder auch aus in Umfangsrichtung verlaufenden Teilen des Umfangsgürtels gebildet sein. Im letztgenannten Falle kann das für den Quergürtel zur Verfügung stehende Querschnittsvolumen konstruktiv optimal genutzt werden, was sich vorteilhaft auf Kosten und Gewicht des Gürtel-Luftreifens (1) auswirkt.

Aus Fig. 5 ist im übrigen erkennbar, daß die wirksame Breite (22) der Stahlfolie (11) im Aufstandsbereich auf eine wirksame Arbeitsbreite (23) vergrößert wird.

Die verstärkte Wölbung der Stahlfolie (11) im unbelasteten Bereich mittels einer Einlage (21) kann bei jeder der vorstehend beschriebenen Gürtelkonstruktionen Anwendung finden.

Fig. 6 zeigt die Gürtelkonstruktion (16) der Ausführungsform gemäß Figur 2 in einem Längsschnitt. Dabei ist erkennbar, daß sowohl die Karkasse (10) als auch die 90 Grad-Lage (19) aus einer Mehrzahl von parallel zueinander angeordneten faden- oder garnförmigen Festigkeitsträgern (24 bzw. 25) oder Corden gebildet ist, wobei die parallel verlaufenden Festigkeitsträger (24 und 25) in nicht dargestellter Weise miteinander verbunden sein können, beispielsweise durch eingewebte Querfäden.

**Ansprüche**

1. Gürtel-Luftreifen (1) für Fahrzeugräder, mit einem torusförmig gewölbten Körper (2) aus elastischem Material wie vulkanisiertem kautschukartigen Material oder Kautschuk, der am Außenumfang eine Lauffläche (3) und am Innenumfang zwei parallel zueinander verlaufende Wulstringe (6, 7) aufweist, mit einer in den gewölbten Körper eingebetteten, von Wulstring zu Wulstring verlaufenden Karkasse (10) und mit einer im Bereich der Lauffläche in den gewölbten Körper eingebetteten Gürtelkonstruktion, die für die Seitensteifigkeit des Reifens einen Seitenkräfte aufnehmenden Quergürtel (15; 16; 20) und für die Umfangssteifigkeit des Reifens einen aus wenigstens einem ringförmigen Festigkeitsträger (13) bestehenden Umfangsgürtel aufweist, **dadurch gekennzeichnet,** daß der Quergürtel (15; 16; 20) eine radial äußere drucksteife Lage (11) und im Abstand (17) davon eine radial innere zugfeste zweite Lage (10; 19) aufweist, zwischen denen sich eine sie verbindende Matrix (18) befindet.

2. Reifen nach Anspruch 1, dadurch gekennzeichnet, daß die Matrix (18) aus dem Material des Reifen-Körpers besteht.

3. Reifen nach Anspruch 1 oder 2, dadurch gekennzeichnet, daß die drucksteife äußere Lage (11) des Quergürtels (15; 16; 20) eine geringere Breite als die zugfeste innere Lage (10; 19) aufweist.

4. Reifen nach einem der Ansprüche 1 bis 3, dadurch gekennzeichnet, daß die äußere Lage (11) des Quergürtels (15; 16; 20) ein in Umfangsrichtung des Reifens dehnbares und in radialer Richtung des Reifens (1) biegefähiges, jedoch in lateraler Richtung drucksteifes Metallblech oder eine entsprechende Kunststoff-Folie ist und daß die innere Lage (10; 19) des Quergürtels in Querrichtung des Reifens verlaufende dehnungsstabile Zugelemente (24; 25) aufweist.

5. Reifen nach Anspruch 4, dadurch gekennzeichnet, daß die Zugelemente (19, 25) über oder unter der Karkasse (10) im Reifenkörper (2) eingebettet angeordnet sind.

6. Reifen nach Anspruch 4 oder 5, dadurch gekennzeichnet, daß die Zugelemente (19, 25) undehnbare Drähte, Fäden oder Garne aufweisen.

7. Reifen nach Anspruch 4, dadurch gekennzeichnet, daß die Zugelemente (24) Teil der Karkasse (10) sind.

8. Reifen nach einem der Ansprüche 4 bis 6, dadurch gekennzeichnet, daß die Zugelemente (19, 25) nahe der Innenseite des Reifen-Körpers (2) in diesen eingebettet sind und dabei Teil des dort befindlichen Inliners des Reifens (1) bilden.

9. Reifen nach einem der Ansprüche 1 bis 8, dadurch gekennzeichnet, daß zwischen der drucksteifen äußeren Lage (11) und der zugfesten zweiten Lage (10; 19) des Quergürtels (15; 16; 20) in den Reifen-Körper (2) eine Einlage (21) eingebettet ist, die an der Außenseite stärker konvex gekrümmt ist als an der Innenseite.

10. Reifen nach einem der Ansprüche 1 bis 9, dadurch gekennzeichnet, daß die drucksteife Lage (11) des Quergürtels (15; 16; 20) in lateraler Richtung einstückig ausgebildet ist.

# FIG.1

# FIG.2

# FIG.3

FIG.4

FIG. 5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | EP-A-0 264 539 (J. JANUS) <br> * Spalte 10, Zeile 39 - Spalte 11, Zeile 25; Figur 7 * | 1,2,6 | B 60 C 9/18 |
| A | | 10 | |
| | --- | | |
| A | DE-A-3 640 222 (DEUTSCHE SEMPERIT) <br> * Spalte 4, Zeile 23 - Spalte 5, Zeile 2; Ansprüche 1,2,7,8 * | 1,6,10 | |
| | --- | | |
| A | EP-A-0 191 124 (J. JANUS) <br> * Ansprüche 1,2,16,18; Figuren 6,7,12,13 * | 1,5-7 | |
| | --- | | |
| A | FR-A-1 290 231 (KLEBER-COLOMBES) <br> * Ansprüche 1,6 * | 1,9 | |
| | --- | | |
| A | EP-A-0 114 460 (GRUMMAN AEROSPACE) <br> ----- | | |

|  |
|---|
| RECHERCHIERTE SACHGEBIETE (Int. Cl.5) |
| B 60 C |

Der vorliegende Recherchenbericht wurde für alle Patentansprüche erstellt

| Recherchenort | Abschlußdatum der Recherche | Prüfer |
|---|---|---|
| DEN HAAG | 06-12-1989 | THEODORIDOU E. |